# FASCICULE DE BREVET EUROPEEN

(11) **EP 0 536 049 B1**
(45) Date de publication et mention de la délivrance du brevet: **30.07.1997**
(21) Numéro de dépôt: 92402685.9
(22) Date de dépôt: 02.10.1992
(51) Int. Cl.: C03C 3/087, C03C 4/02, B60J 1/00

(54) **Composition de verre coloré destiné à la réalisation de vitrages**
Farbglaszusammensetzung für die Herstellung von Verglasungen
Colored glass composition for the manufacture of glazing

(30) Priorité: 03.10.1991 FR 9112164
(43) Date de publication de la demande: 07.04.1993
(60) Demande divisionnaire: 96120971.5
(73) Titulaire: SAINT-GOBAIN VITRAGE, 92400 Courbevoie (FR)
(72) Inventeur: Alvarez-Casariego, Pédro, E-33400 Salinas (ES); Massol, Jean-Jacques, F-92600 Asnieres (FR)
(74) Mandataire: Breton, Jean-Claude

(56) Documents cités:
- EP-A- 0 349 909
- EP-A- 0 482 535
- FR-A- 2 074 983
- GB-A- 1 168 769
- GB-A- 1 331 492
- GB-A- 2 162 835
- US-A- 3 296 004
- US-A- 4 104 076
- US-A- 4 190 452
- US-A- 4 866 010
- CHEMICAL ABSTRACTS, vol. 98, no. 2, 10 Janvier 1983, Columbus, Ohio, US; abstract no. 7450d, page 177 ; & JP-A-57 106 537 (NIPPON SHEET GLASS CO) 2 Juillet 1982

## Description

La présente invention se rapporte à une composition de verre coloré destiné à la fabrication d'un vitrage susceptible, notamment, d'être monté sur un véhicule automobile. Elle vise plus particulièrement une composition de verre permettant de réaliser un vitrage susceptible de former les glaces latérales arrières et les lunettes arrières d'un véhicule automobile.

Les constructeurs d'automobiles proposent des vitrages colorés à leurs clients, non seulement dans un souci d'ordre esthétique mais aussi pour le rôle fonctionnel qu'ils peuvent remplir, à savoir, notamment l'amélioration de la visibilité dans des conditions critiques d'éclairement, et/ou le confort des passagers.

Sous ce dernier aspect, la proportion de surface vitrée progressant chaque année sur les nouveaux modèles, l'effet de serre constitue désormais un facteur important à prendre en compte dans la climatisation du véhicule. L'une des voies visant à réduire ledit effet réside dans la mise au point de vitrages de transmission faible pour les rayonnements du proche infra-rouge, mais dont la transmission pour le spectre du visible, bien qu'inférieure à celle des pare-brise classiques, soit encore acceptable pour les passagers.

Le brevet US-A-4 104 076 propose des verres à base d'oxydes de fer, de cobalt, de chrome et/ou d'uranium et contenant éventuellement du sélénium. Ces verres se classent en deux catégories : les verres bronze qui présentent un facteur de transmission lumineuse entre 40 et 55 %, les verres gris pour lesquels ce facteur est compris entre 35 et 45 %. Ces verres, plus particulièrement destinés à la réalisation de vitrages pour le bâtiment, présentent un facteur de transmission énergétique globale classique inférieur à 50 % pour une épaisseur de 6,2 mm.

La demande de brevet EP-A-0 349 909 proposent des verres de teinte grise à base d'oxydes de fer et de cobalt auxquels on ajoute au moins 30 ppm de sélénium. Ces verres se caractérisent, pour une épaisseur de 5,56 mm, par un facteur de transmission lumineuse compris entre 5 et 20 % et un facteur de transmission énergétique globale inférieur à 40 %. Tous les verres donnés à titre d'exemples présentent un facteur de transmission énergétique supérieur au facteur de transmission lumineuse.

La présente invention se propose de fournir des verres colorés dans la masse qui présentent, pour une épaisseur déterminée, une transmission lumineuse globale modérée et une transmission énergétique globale correspondante inférieure.

L'invention se propose également de fournir des verres colorés de compositions différentes qui permettent, sous forme de vitrages, d'être montés sur un même véhicule automobile.

D'après l'invention, ces buts sont atteints grâce à des verres colorés dont la composition comprend les constituants ci-après dans les proportions pondérales définies par les limites suivantes :

| | |
|---|---|
| SiO₂ | 64 à 75 % |
| Al₂O₃ | 0 à 5 % |
| B₂O₃ | 0 à 5 % |
| CaO | 5 à 15 % |
| MgO | 0 à 5 % |
| Na₂O | 10 à 18% |
| K₂O | 0 à 5 % |
| et, à titre d'agents colorants : | |
| Fe₂O₃ (fer total) | 0,5 à 1,5 % |
| CoO | 0,003 à 0,015 % |
| Se | 0 à 0,0025% |
| Cr₂O₃ | 0,025 à 0,09 % |

ces verres ayant un facteur de transmission énergétique globale (T_{E}) inférieur au facteur de transmission lumineuse sous illuminant A (TL_{A}), le facteur T_{E} étant compris entre 10 et 48 % et le facteur TL_{A} entre 20 et 60 % pour une épaisseur de 3,85 millimètres.

Les compositions selon l'invention peuvent contenir d'autres constituants en très faibles quantités, provenant de composés ajoutés au mélange vitrifiable pour faciliter l'affinage du verre. C'est le cas, par exemple, de SO₃ provenant de la décomposition de sulfate ajouté au mélange.

Les verres selon l'invention peuvent être élaborés dans des fours classiques et transformés en ruban continu par la technique bien connue du verre flotté sur bain d'étain.

Les verres selon l'invention présentent une pureté d'excitation sous illuminant C peu élevée. Elle est généralement inférieure à 15 % et le plus souvent inférieure à 12%.

Les caractéristiques de transmission de verres selon l'invention ainsi que leur longueur d'onde dominante sous illuminant C sont régies par leur état d'oxydo-réduction. Selon la présente invention 16 à 55 % du fer total, exprimé sous forme de Fe₂O₃ peut être sous forme d'oxyde ferreux. Plus généralement, 20 à 40 % du fer total est sous la forme d'oxyde ferreux.

Les verres selont l'invention présentent des teintes grises et des colorations plus ou moins neutres, susceptibles de varier du bleu/vert au vert/jaune en passant par toutes les nuances intermédiaires, correspondant à des longueurs d'onde dominantes sous illuminant C comprises entre 490 et 560 nm.

Les verres selon l'invention présentent les caractéristiques de transmission désirées en utilisant comme agents colorants les oxydes de fer et de cobalt, en ajoutant, de l'oxyde de chrome et éventuellement du sélénium, ce dernier ayant pour effet de diminuer la pureté d'excitation.

Pour préparer les verres de l'invention, on utilise comme composition de base une composition de verre traditionnelle dans l'industrie du verre plat, dans laquelle on ajoute les agents colorants suivant des proportions qui permettent, pour une épaisseur déterminée, d'obtenir les caractéristiques optiques et l'apparence recherchées. Le verre de base choisi a la composition pondérale suivante :

| | |
|---|---|
| SiO₂ | 72,1 % |
| Al₂O₃ | 0,74% |
| CaO | 8,90% |
| MgO | 3,79 % |
| Na₂O | 14,16 % |
| K₂O | 0,11 % |
| SO₃ | 0,20% |

Les agents colorants sont ajoutés dans ce verre au détriment de la silice.

Le tableau en annexe présente une série d'exemples de compositions de verre illustrant l'invention. Les teneurs en agents colorants sont exprimées en pourcentages pondéraux. Les valeurs des différentes caractéristiques de ces verres ont été mesurées sur des vitrages de 3,85 millimètres d'épaisseur. Le niveau de pureté atteint par certains verres selon l'invention est remarquable eu égard à la très faible teneur en sélénium de ces verres. Pour la totalité des verres selon l'invention le rapport Fe₂O₃ (total)/Se est supérieur à 200.

Comme indiqué précédemment, les verres selon l'invention peuvent être transformés en ruban continu par la technique du verre flotté. Les feuilles de verre obtenues par découpe de ce ruban présentent des épaisseurs variant entre environ 2 et 8 mm. Ces feuilles de verre peuvent être utilisées seules ou associées à une feuille de verre non coloré pour réaliser des vitrages susceptibles d'être montés sur un véhicule automobile au niveau des latéraux arrières et de la lunette arrière.

Ces vitrages peuvent être montés en les associant dans une garniture avec d'autres vitrages qui forment le pare-brise et les latéraux avant. C'est ainsi qu'une garniture de véhicule automobile peut être constituée de vitrages dont le facteur de transmission lumineuse globale sous illuminant A, pour une épaisseur déterminée, diminuera en passant du pare-brise à la lunette arrière.

Les vitrages obtenus à partir des verres selon l'invention peuvent être avantageusement utilisés dans le cadre d'une telle garniture pour véhicule automobile.

Ainsi les vitrages des latéraux arrières, qu'il s'agisse de latéraux mobiles ou fixes appelés custodes, pourront être réalisés à partir de verres qui, pour une épaisseur de 3,85 mm, présentent un facteur de transmission lumineuse globale sous illuminant A compris entre environ 30 et 60 %. Ils pourront être associés à des lunettes arrières réalisées à partir de verres qui, pour une épaisseur identique, présentent un facteur de transmission lumineuse globale sous illuminant A comprise entre environ 20 et 45 %.

Une garniture de ce genre pourrait être réalisée à partir des verres références Ex. 3 et Ex. 1 dans le tableau en annexe. Les vitrages formés du verre Ex. 3 serviraient de latéraux arrières, le vitrage formé du verre Ex. 1 constituerait la lunette arrière.

**TABLEAU**

| | EX.1 | EX.2 | EX.3 | EX.4 | EX.5 | EX.6 |
|---|---|---|---|---|---|---|
| Fe₂O₃ (fer total) | 0,90 | 0,96 | 1,27 | 1,10 | 0,99 | 0,95 |
| CoO | 0,0130 | 0,0099 | 0,0093 | 0,0093 | 0,0103 | 0,0104 |
| Se | 0,0010 | 0,0005 | - | - | 0,0003 | - |
| Cr₂O₃ | 0,0480 | 0,0350 | 0,0780 | 0,0880 | 0,0450 | 0,0600 |
| Rédox | 0,31 | 0,35 | 0,21 | 0,29 | 0,25 | 0,35 |
| TL_{A} (%) | 32,5 | 37,8 | 40,0 | 39,2 | 40,2 | 38,8 |
| T_{E} (%) | 24,8 | 24,7 | 29,8 | 16,5 | 29,8 | 24,7 |
| λ_{D(C)} (nm) | 501 | 495 | 497 | 495 | 502 | 497 |
| P_{C} (%) | 5,61 | 8,81 | 11,5 | 14 | 6,49 | 12,21 |

## Revendications

1. Composition de verre coloré susceptible de contenir à titre d'agents colorants des constituants tels que Fe₂O₃, CoO, Se, Cr₂O₃, **caractérisée en ce qu'**elle comprend les constituants ci-après dans les limites suivantes, exprimées en pourcentages pondéraux :
| | |
|---|---|
| SiO₂ | 64 à 75 % |
| Al₂O₃ | 0 à 5 % |
| B₂O₃ | 0 à 5 % |
| CaO | 5 à 15 % |
| MgO | 0 à 5 % |
| Na₂O | 10 à 18% |
| K₂O | 0 à 5 % |
| Fe₂O₃ (fer total) | 0,5 à 1,5 % |
| CoO | 0,003 à 0,015 % |
| Cr₂O₃ | 0,025 à 0,09 % |
| Se | 0 à 0,0025 % |
cette composition de verre ayant un facteur de transmission énergétique globale (T_{E}) inférieur au facteur de transmission lumineuse sous illuminant A (T_{LA}), le facteur T_{E} étant compris entre 10 et 48 % et le facteur T_{LA} entre 20 et 60 % pour une épaisseur de 3,85 millimètres.

2. Composition selon la revendication 1, **caractérisée en ce que** sa teneur en FeO représente entre 16 et 55 % de la teneur en fer total exprimé sous forme de Fe₂O₃.

3. Composition selon la revendication 2, **caractérisée en ce que** sa teneur en FeO représente entre 20 et 40 % du fer total exprimé sous la forme Fe₂O₃.

4. Composition selon l'une quelconque des revendications précédentes, **caractérisée en ce qu'**elle présente une longueur d'onde dominante, sous illuminant C, comprise entre 490 et 560 nanomètres.

5. Vitrage comprenant une feuille de verre coloré dont la composition est définie par l'une des revendications précédentes et dont l'épaisseur est comprise entre 2 et 8 millimètres.

6. Garniture de vitrages montés sur un véhicule automobile, comprenant un pare-brise, des latéraux avants et arrières et une lunette arrière, caractérisée en ce que les latéraux arrières, mobiles et fixes, et la lunette arrière sont constitués par des vitrages définis par la revendication précédente.

7. Garniture selon la revendication 6, **caractérisée en ce que** les latéraux arrières et la lunette arrière sont constitués respectivement par des vitrages qui, pour une épaisseur déterminée, présente des facteurs de transmission lumineuse globale sous illuminant A différents.

8. Garniture selon la revendication 7, **caractérisée en ce que** les vitrages formant les latéraux arrières présentent, pour une épaisseur de 3,85 mm, un facteur de transmission globale sous illuminant A compris entre 30 et 60 %, le vitrage constituant la lunette arrière présentant, pour la même épaisseur, un facteur de transmission globale sous illuminant A compris entre 20 et 45 %.

## Claims

1. Coloured glass composition, capable of containing, as colouring agents, constituents such as Fe₂0₃, CoO, Se, Cr₂O₃, characterized in that it contains the following constituents, within the following limits, expressed in percentages by weight:
| | |
|---|---|
| SiO₂ | 64 to 75% |
| Al₂O₃ | 0 to 5% |
| B₂O₃ | 0 to 5% |
| CaO | 5 to 15% |
| MgO | 0 to 5% |
| Na₂O | 10 to 18% |
| K₂O | 0 to 5% |
| Fe₂O₃ (total iron) | 0.5 to 1.5% |
| CoO | 0.003 to 0.015% |
| Cr₂O₃ | 0.025 to 0.09% |
| Se | 0 to 0.0025% |
this glass composition having a total energy transmission factor (T_{E}) less than the light transmission factor under illuminant A (T_{LA}), the factor T_{E} being from 10 to 48% and the factor T_{LA} from 20 to 60% for a thickness of 3.85 millimetres.

2. Composition according to claim 1, characterized in that its FeO content represents from 16 to 55% of the total iron content expressed in the form of Fe₂O₃.

3. Composition according to Claim 2, characterized in that its FeO content represents from 20 to 40% of the total iron expressed in the form of Fe₂O₃.

4. Composition according to any one of the preceding Claims, characterized in that it has a dominant wavelength, under illuminant C, of from 490 to 560 nanometres.

5. Glazing pane comprising a coloured glass sheet, the composition of which is defined by one of the preceding Claims and the thickness of which is from 2 to 8 millimetres.

6. Glazing set mounted on an automobile vehicle, comprising a windscreen, front side windows and rear side windows and a rear window, characterized in that the rear side windows, both movable and fixed, and the rear window are constituted of panes defined by the preceding Claim.

7. Glazing set according to Claim 6, characterized in that the rear side windows and the rear window are constituted, respectively, of panes which, for a given thickness, have different total light transmission factors under illuminant A.

8. Glazing set according to Claim 7, characterized in that the panes forming the rear side windows have, for a thickness of 3.85 mm, a total transmission factor under illuminant A of from 30 to 60%, the pane constituting the rear window having, for the same thickness, a total transmission factor under illuminant A of from 20 to 45%.

## Patentansprüche

1. Farbglaszusammensetzung, die als Farbmittel Bestandteile wie Fe₂O₃, CoO, Se und Cr₂O₃ enthalten kann, **dadurch gekennzeichnet,** daß sie nachstehende, in Gewichtsprozenten ausgedrückte Bestandteile innerhalb folgender Grenzen
| | |
|---|---|
| SiO₂ | 64 bis 75 %, |
| Al₂O₃ | 0 bis 5 %, |
| B₂O₃ | 0 bis 5 %, |
| CaO | 5 bis 15 %, |
| MgO | 0 bis 5 %, |
| Na₂O | 10 bis 18 %, |
| K₂O | 0 bis 5 %, |
| Fe₂O₃ (Gesamteisen) | 0,5 bis 1,5 %, |
| CoO | 0,003 bis 0,015 %, |
| Cr₂O₃ | 0,025 bis 0,09 % und |
| Se | 0 bis 0,0025 % |
umfaßt, wobei bei einer Dicke von 3,85 Millimetern der Gesamtenergiedurchgangsgrad (T_{E}) dieser Glaszusammensetzung 10 bis 48 % beträgt und kleiner als ihr Lichttransmissionsgrad unter der Normallichtart A (T_{LA}) ist, der 20 bis 60 % beträgt.

2. Zusammensetzung nach Anspruch 1, **dadurch gekennzeichnet, daß** ihr vorhandener Gehalt an FeO zwischen 16 und 55 % des als Fe₂O₃ ausgedrückten Gesamteisengehalts beträgt.

3. Zusammensetzung nach Anspruch 2, **dadurch gekennzeichnet, daß** ihr vorhandener Gehalt an FeO zwischen 20 und 40 % des als Fe₂O₃ ausgedrückten Gesamteisens beträgt.

4. Zusammensetzung nach einem der vorhergehenden Ansprüche, **dadurch gekennzeichnet**, **daß** sie unter der Normallichtart C eine dominierende Wellenlänge von 490 bis 560 Nanometern aufweist.

5. Verglasung, die eine Farbglasscheibe enthält, deren Zusammensetzung durch einen der vorhergehenden Ansprüche festgelegt ist und deren Dicke 2 bis 8 Millimeter beträgt.

6. Satz von Verglasungen, die in einem Kraftfahrzeug eingebaut sind, welcher eine Windschutzscheibe, vordere und hintere Seitenfenster und eine Heckscheibe umfaßt**, dadurch gekennzeichnet, daß** die beweglichen und die fest eingebauten hinteren Seitenfenster und die Heckscheibe aus durch vorhergehenden Anspruch definierten Verglasungen bestehen.

7. Satz nach Anspruch 6, **dadurch gekennzeichnet, daß** die hinteren Seitenfenster und die Heckscheibe jeweils aus Verglasungen bestehen, die bei festgelegter Dicke unter der Normallichtart A unterschiedliche Gesamtlichttransmissionsgrade aufweisen.

8. Satz nach Anspruch 7, **dadurch gekennzeichnet, daß** die die hinteren Seitenfenster bildenden Verglasungen bei einer Dicke von 3,85 mm unter der Normallichtart A einen Gesamtlichttransmissionsgrad von 30 bis 60 % aufweisen und die die Heckscheibe bildende Verglasung bei derselben Dicke unter der Normallichtart A einen Gesamtlichttransmissionsgrad von 20 bis 45 % besitzt.
